# DEMANDE DE BREVET EUROPEEN

(11) **EP 1 690 710 A2**
(43) Date de publication de la demande: **16.08.2006**
(21) Numéro de dépôt: 06300012.9
(22) Date de dépôt: 06.01.2006
(51) Int. Cl.: B60J 1/00, B60J 1/02

(54) **Ensemble de vitrages encapsulés pour un véhicule automobile, procédé de pose d'un tel ensemble de vitrages encapsulés et véhicule automobile comportant un tel ensemble de vitrages encapsulés**

(30) Priorité: 11.02.2005 FR 0501408
(71) Demandeur: Peugeot Citroen Automobiles SA, 78140 Vélizy-Villacoublay (FR)
(72) Inventeur: David, Jérôme, 92100 Boulogne Billancourt (FR); Jaouën, Jean-Sébastien, 78000 Versailles (FR); Veron-Delor, Laurent, 28130 Hanches (FR)

(57) **Abrégé**

L'invention concerne un ensemble de vitrages pour un véhicule automobile. Les vitrages (1, 3), qui sont au moins au nombre de deux, sont assemblés par au moins une jonction (4) réalisée sous la forme d'une encapsulation.

L'invention concerne également un procédé de pose d'un ensemble de vitrages encapsulés et un véhicule automobile comportant un tel ensemble de vitrages encapsulés.

## Description

L'invention concerne un ensemble de vitrages encapsulés pour un véhicule automobile, un procédé de pose d'un tel ensemble de vitrages encapsulés, ainsi qu'un véhicule automobile équipé d'un tel ensemble de vitrages encapsulés.

Lors de la conception d'un véhicule automobile, un des problèmes les plus importants à résoudre est celui de pouvoir assurer le conducteur du véhicule d'une bonne visibilité et d'assurer en même temps une rigidité suffisante de l'habitacle du véhicule pour ne pas entraver la sécurité du conducteur et des passagers éventuels du véhicule. Habituellement, les véhicules automobiles comportent une baie constituée, dans une structure bi-montant, d'un pare-brise et de deux fenestrons adjacents, droit et gauche, le pare-brise et les fenestrons étant tenus sur chacun des deux côtés du véhicule, par deux montants faisant partie intégrante des structures latérales des caisses. De telles structures présentent souvent une largeur d'occultation importante en raison de la grande largeur des montants.

Selon une autre structure, également bi-montant, on rapporte les deux montants aux structures latérales des caisses et on les dispose le plus en avant possible. Il en résulte une structure selon laquelle le pare-brise et les fenestrons adjacents sont séparés les uns des autres avec une largeur d'occultation parfois meilleure par rapport à la structure précédente, mais constituant une complexité plus importante pour la fabrication du véhicule, en raison du fait de rapporter des pièces de structure.

Selon une troisième structure, le pare-brise est monté avec un seul montant pour chaque côté, les fenestrons étant intégrés dans les portes latérales du véhicule. Cette structure donne en général une largeur d'occultation importante, approximativement la somme des largeurs du montant du pare-brise et du montant adjacent de la porte, et implique donc une visibilité médiocre et en conséquence un risque de sécurité non négligeable.

Selon encore une autre structure, on utilise un pare-brise panoramique, c'est-à-dire un pare-brise ayant des retours latéraux réalisés en une seule pièce avec le pare-brise. Cette structure donne une visibilité améliorée, notamment vers les côtés bas, mais résulte en une complexité très importante pour la réalisation du vitrage. Une telle structure est, au moins pour le moment, impossible à réaliser lorsque les retours latéraux ont des dimensions plus importantes.

Le but de l'invention est de proposer un ensemble de vitrages qui est assemblé de manière à assurer une bonne visibilité, et qui puisse être utilisé aussi bien pour améliorer la visibilité vers l'avant que la visibilité vers l'arrière.

Le but de l'invention est atteint avec un ensemble de vitrages pour un véhicule automobile, les vitrages, qui sont au moins au nombre de deux, étant assemblés par au moins une jonction réalisée sous la forme d'une encapsulation.

L'ensemble de vitrages de l'invention est conçu de manière à pouvoir être utilisé pour tout type de véhicule et dans toute position, dès lors qu'il s'agit d'assurer à l'utilisateur du véhicule une vue à grand angle. Ainsi, l'ensemble de vitrages sera utilisé principalement comme pare-brise panoramique, par exemple comme pare-brise triptyque, d'une voiture de tourisme ou du poste de conduite d'un véhicule industriel, comportant une partie frontale et deux retours latéraux. Toutefois, l'ensemble de vitrages peut être utilisé aussi comme lunette arrière panoramique d'une voiture ou comme vitrage incorporant un toit vitré d'une voiture de tourisme ou d'un véhicule industriel.

L'ensemble de vitrages selon l'invention est conçu pour être réalisé en dehors du véhicule auquel il est destiné et pour être posé comme s'il s'agissait d'une pièce monolithique, c'est-à-dire réalisé sous la forme d'une seule vitre.

L'originalité de l'ensemble de vitrages selon l'invention ressort plus particulièrement lorsqu'il forme une vitre panoramique, c'est-à-dire lorsque les différentes parties de l'ensemble ne sont absolument pas disposées dans un même plan, mais en deux plans adjacents formant un angle entre eux.

L'originalité de l'ensemble de vitrages selon l'invention réside par ailleurs dans le fait que les jonctions entre chaque paire de vitrages considérée de cet ensemble de vitrages sont réalisées sous la forme d'encapsulations, et de préférence sous la forme de surmoulages en polymère.

Sur le plan pratique, le surmoulage en polymère est obtenu en disposant l'ensemble des vitrages destiné à être assemblé selon l'invention, dans un moule et d'injecter le polymère entre les différents bords en regard des vitrages à assembler.

Cette technique permet d'obtenir une vitre quasi panoramique, les occultations résultant des jonctions étant les plus petites possibles. En même temps, la réalisation des jonctions sous la forme d'encapsulations, notamment sous la forme de surmoulages en polymère, permet de renoncer à des montants ou à d'autres éléments de structure occultants utilisés avant l'invention. Il va sans dire que les propriétés de résistance, d'absorption etc. de ces éléments de structure doivent être reportées sur d'autres parties structurelles de la caisse du véhicule. Toutefois, la présente invention n'exclut pas de recourir à des inserts métalliques, comme cela sera expliqué plus loin, lorsque le galbe des vitrages et/ou les propriétés mécaniques du polymère utilisé le rend nécessaire. Mais de tels inserts ne constitueront pas de remplacement pour les éléments structurels des techniques antérieures et, en conséquence, ne seront conçus que pour cette tâche de renforcement des jonctions.

L'ensemble de vitrages selon l'invention peut aussi avoir l'une au moins des caractéristiques supplémentaires ci-après, considérées isolément ou selon toutes leurs combinaisons techniquement possibles :
- la jonction, ou chacune des jonctions, est un surmoulage en polymère ;
- les jonctions ont été obtenues par injection d'un polymère ;
- au moins un des vitrages n'est pas un vitrage plan ;
- au moins un des vitrages est un pare-brise ;
- les vitrages forment au moins un pare-brise triptyque comportant une partie frontale et deux retours latéraux ;
- un des vitrages est un pare-brise et un autre est un toit vitré ;
- au moins une des jonctions est pourvue d'un insert métallique ;
- l'ensemble de vitrages est pourvu de repères de position ;
- les repères sont disposés proches des extrémités opposées d'au moins deux jonctions ;
- les repères sont disposés sensiblement aux extrémités opposées des deux jonctions reliant la partie frontale et les deux retours latéraux d'un pare-brise triptyque.

Un ensemble particulier de vitrages selon l'invention est un pare-brise triptyque comportant une partie frontale et deux retours latéraux, la partie frontale et les deux retours latéraux étant assemblés par des jonctions réalisées sous la forme de surmoulages en polymère et le pare-brise étant pourvu de quatre repères disposés sensiblement aux extrémités opposées des deux jonctions.

L'invention concerne aussi un procédé de pose d'un ensemble de vitrages dans un véhicule automobile à l'aide d'un robot de pose. Ce procédé comprend au moins les étapes suivantes :
poser l'ensemble de vitrages sur une table de recentrage, approximativement bien orienté et uniquement par appui sur des bandes supérieure et inférieur de l'ensemble de vitrages ;
mesurer la position de plusieurs repères de positionnement intégrés dans des jonctions surmoulées de l'ensemble de vitrages, les repères étant situés aux extrémités opposées de deux jonctions reliant une partie de l'ensemble à deux autres parties de l'ensemble ;
déduire de la position des repères de positionnement, un décalage par rapport à une position nominale dans l'espace, ce décalage indiquant au robot de pose la position à adopter pour saisir l'ensemble de vitrages ;
encoller une piste d'encollage de l'ensemble de vitrages avec un cordon de colle ;
positionner l'ensemble de vitrages par rapport au véhicule automobile destiné à être équipé avec l'ensemble de vitrages ;
poser l'ensemble de vitrages dans le véhicule automobile.

Les repères de positionnement sont avantageusement réalisés sous la forme de plots palpables ou sous la forme de marquages optiquement repérables. Le nombre de repères dépend de la forme de l'ensemble de vitrages et des possibilités de positionnement afin d'obtenir un repérage simple pour le robot de pose. Souvent, on utilisera quatre repères de positionnement.

L'invention concerne enfin un véhicule automobile comprenant un ensemble de vitrages tel que défini plus haut ou un pare-brise triptyque tel que défini plus haut.

L'invention concerne donc un ensemble de plusieurs pièces de vitrages, appelé par la suite par la désignation brève "ensemble de vitrages", maintenu en un ensemble solidaire par un surmoulage, ou une encapsulation, moyennant un polymère. Le procédé de réalisation d'un tel ensemble de vitrages consiste essentiellement à placer les vitrages dans un moule qui les conforment en se refermant, ce qui permet l'injection du polymère de manière précise, quelque soit la taille et la forme de chacun de ces vitrages.

La technique de l'invention trouve une application particulière dans la réalisation de pare-brise triptyque, de tels pare-brises comportant une partie frontale et deux retours latéraux. Cette technique peut s'appliquer également à d'autres vitrages, par exemple à la fixation d'un toit vitré à la partie supérieure du pare-brise ou la réalisation d'ensembles vitrés de grande surface à partir de plusieurs pièces de vitrages.

La technique de l'invention permet plus particulièrement d'assembler plusieurs pièces de vitrages de manière que les zones d'occultation soient les plus minces possibles. Ces jonctions surmoulées peuvent intégrer plusieurs fonctions, par exemple :
- la fonction de garnissage intérieur fixé par adhésif ou par fixage sur une pièce d'interface noyée dans le polymère ou collée ou clipsée, cette pièce d'interface pouvant elle-même accueillir une agrafe solidaire du garnissage,
- la fonction d'enjoliveurs extérieurs fixés par clipsage sur des agrafes chaussées à chaud ou noyées dans le polymère et vissage en parties inférieure et supérieure sur la structure du véhicule,
- une fonction anti-salissure, canalisant l'eau de pluie vers le pavillon.

Les ensembles de vitrages selon l'invention diffèrent assez sensiblement des ensembles de vitrages utilisés jusqu'à l'invention, dans le mesure où les ensembles de l'invention constituent des ensembles tridimensionnels alors que les vitrages antérieurs, même s'ils possèdent un certain galbe, sont à considérer plutôt comme des pièces bi-dimensionnels.

Il s'ensuit qu'il n'est, par exemple, plus possible de réaliser l'encollage de manière usuelle, c'est-à-dire de poser un cordon de colle directement sur la sérigraphie périphérique du vitrage, puisque cela aurait pour effet d'étaler la colle lors du contact entre le vitrage et les feuillures, d'où une mauvaise réalisation de l'étanchéité, voire une mauvaise réalisation de la liaison mécanique entre la pièce encoller et la caisse.

L'ensemble de vitrages de l'invention présente, par ailleurs, aussi une caractéristique d'une vraie pièce en trois dimensions, à savoir celle de ne pas pouvoir écarter, ni rapprocher les parties latérales de l'ensemble de vitrages, pendant la pose, par exemple pour éviter que le cordon de colle soit essuyé par des éléments le long desquels l'ensemble de vitrages est manoeuvré .

Pour cette raison, l'ensemble de vitrages selon l'invention possède une piste d'encollage réalisée par surmoulage en même temps que la jonction entre les différents vitrages, ce qui permet de revenir à une approche suivant une direction normale aux feuillures. Ceci implique bien sûr d'adapter la structure du véhicule et le procédé de montage à la disposition selon l'invention. Avantageusement, les feuillures des parties latérales sont orientées parallèlement à la piste d'encollage rapportée.

Le vitrage de l'invention est conçu pour être posé par un automate de manipulation, un "robot de pose", seul moyen d'effectuer les différentes opérations avec une rapidité et une qualité d'exécution satisfaisante. L'automate est équipé d'un préhenseur comportant des ventouses latérales qui maintiennent les retours latéraux et évitent d'endommager la jonction surmoulée lors des mouvements rapides. Cela permet de ne pas avoir recours à un insert métallique pour rigidifier la pièce et d'avoir une occultation minimale.

Lors de la pose d'un ensemble de vitrages selon l'invention, l'ensemble est d'abord posé sur une table dite de recentrage, qui permet de positionner l'ensemble précisément par rapport à l'automate, qui répète toujours la même trajectoire entre la table et la caisse. L'ensemble de vitrages est donc toujours saisi de la même façon par l'automate, aux intervalles de tolérances près, ce qui contribue à assurer la qualité géométrique recherchée de la pose.

Toutefois, il n'est pas possible d'utiliser un appui direct sur la périphérie de la pièce dans la direction transversale du véhicule, car la souplesse des jonctions surmoulées empêche tout positionnement précis et répétable dans cette direction transversale. De plus, tout appui transversal risque de détériorer l'ensemble de vitrages.

Il est donc prévu, selon l'invention de venir en appui sur plusieurs repères de positionnement intégrés dans la jonction surmoulée, dont la position et les dimensions permettent à un système de rouleaux, de réaliser cet appui direct et de positionner la pièce par rapport à l'axe transversal du véhicule.

Les repères de positionnement, dans la plupart des cas il y en a quatre, sont situés aux extrémités de la jonction surmoulée ou à tout endroit propice à pouvoir les dissimuler avec le garnissage du pavillon en partie supérieure de l'ensemble de vitrages et avec la planche de bord en partie inférieure. Lorsque la table de recentrage utilise des palpeurs pour le positionnement de l'automate de pose, les repères de positionnement sont réalisés sous la forme de plots physiquement intégrés dans les jonctions surmoulées. Dans le cas où la table de recentrage utilise un principe de vision, les repères de positionnement sont réalisés sous la forme de marquage pouvant être reconnus par le système de vision. Toutefois, il est également possible d'utiliser des plots qui sont alors reconnus par le système de vision.

Lors de la pose d'un ensemble de vitrages selon l'invention, l'ensemble de vitrages est posé sur une table de recentrage et positionné approximativement, par exemple suivant les bandes, ou bords, supérieure et inférieure de l'ensemble de vitrages, le cas échéant par appui sur ces bords. Ensuite, le système de vision ou les palpeurs indiquent à l'automate de préhension la position à adopter pour saisir l'ensemble des vitrages correctement. Une fois le recentrage effectué, l'automate saisit l'ensemble de vitrages à l'aide d'un préhenseur équipé de ventouses et notamment de ventouses latérales destinées à maintenir les parties latérales, par exemple les retours latéraux de l'ensemble de vitrages, pour éviter d'endommager les jonctions surmoulées lors de mouvements rapides. Cette disposition permet de ne pas avoir recours à des inserts métalliques pour rigidifier les jonctions et permet ainsi d'avoir des occultations minimales. Lorsque l'automate a saisi l'ensemble de vitrages, il le présente sous une buse d'un dispositif d'encollage.

Ensuite, l'automate se positionne par rapport à la caisse du véhicule et pose l'ensemble de vitrages à l'aide de vérins plaqueurs. Le procédé de pose se termine par une mesure de contrôle des jeux de l'ensemble de vitrages par rapport à la caisse.

La présente invention apporte les avantages suivants :
- plusieurs vitrages de complexités moindres sont assemblés de manière à donner un ensemble solidaire de grande surface qui serait impossible à réaliser ou, pour le moins, beaucoup plus difficile à réaliser en un seul vitrage, grâce au principe de jonction surmoulée ;
- l'assemblage de plusieurs vitrages par surmoulage, notamment au lieu d'un assemblage par des montants en tôle, associé au maintien de vitrages formant un retour latéral, pendant le montage, permet de réduire au maximum l'occultation visuelle ; ainsi, des occultations de l'ordre de 70 à 80 mm de largeur peuvent être réduites à des valeurs de l'ordre de 30 mm ou même moins ;
- l'ensemble de vitrages peut être pourvu d'une piste d'encollage spécifique réalisée lors du surmoulage ; une adaptation de la structure du véhicule à la position de la piste d'encollage permet de monter l'ensemble de vitrages sur un véhicule sans détériorer le cordon de colle ;
- l'ensemble de vitrages peut être pourvu de repères qui, associés à un procédé de pose adapté, permettent d'assurer une qualité de pose de l'ensemble de vitrages.

D'autres caractéristiques et avantages de la présente invention ressortiront de la description ci-après d'un mode de réalisation de l'ensemble de vitrages selon l'invention. Cette description est faite en référence aux dessins dans lesquels :
- la figure 1 montre schématiquement un ensemble de vitrages formé de trois pièces de vitrage, l'ensemble étant appelé un pare-brise triptyque,
- la figure 2 montre une jonction surmoulée entre deux pièces de vitrages,
- la figure 3 montre en (a) et (b) deux types d'insert métallique pour une jonction selon la figure 2,
- la figure 4 montre une partie du pare-brise de la figure 1 en une vue de l'intérieur et avec une bande de collage,
- la figure 5 montre la jonction de l'ensemble selon l'invention et la structure d'un véhicule, suivant une coupe transversale et
- la figure 6 montre la disposition de quatre repères de positionnement sur un ensemble de vitrages selon la figure 1, et
- la figure 7 représente schématiquement un ensemble de vitrages selon une variante de réalisation de l'invention.

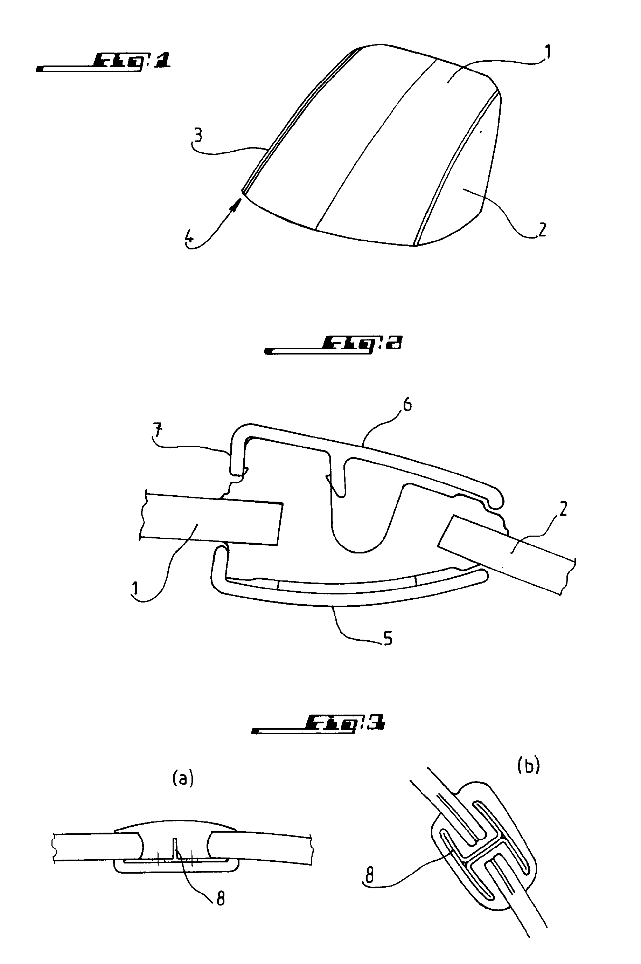

La figure 1 montre un ensemble de vitrages appelé pare-brise triptyque. Le pare-brise triptyque est constitué de trois pièces de vitrages, à savoir une partie frontale 1 et deux retours latéraux 2 et 3. Alors que la partie frontale 1 correspond à un pare-brise traditionnel, les deux retours latéraux 2, 3 correspondent à des fenestrons faisant habituellement partie de la partie vitrée d'une porte avant d'un véhicule ou d'un pare-brise panoramique assemblé avec des moyens traditionnels ou de la structure du véhicule (vitre fixe sur caisse).

Les jonctions entre la partie frontale 1 et respectivement le retour latéral gauche 2 et le retour latéral droit 3 sont réalisées sous la forme de jonctions 4 obtenues par un surmoulage des bords correspondants en regard respectivement de la partie frontale 1 et des retours latéraux 2, 3 à l'aide d'un système d'injection.

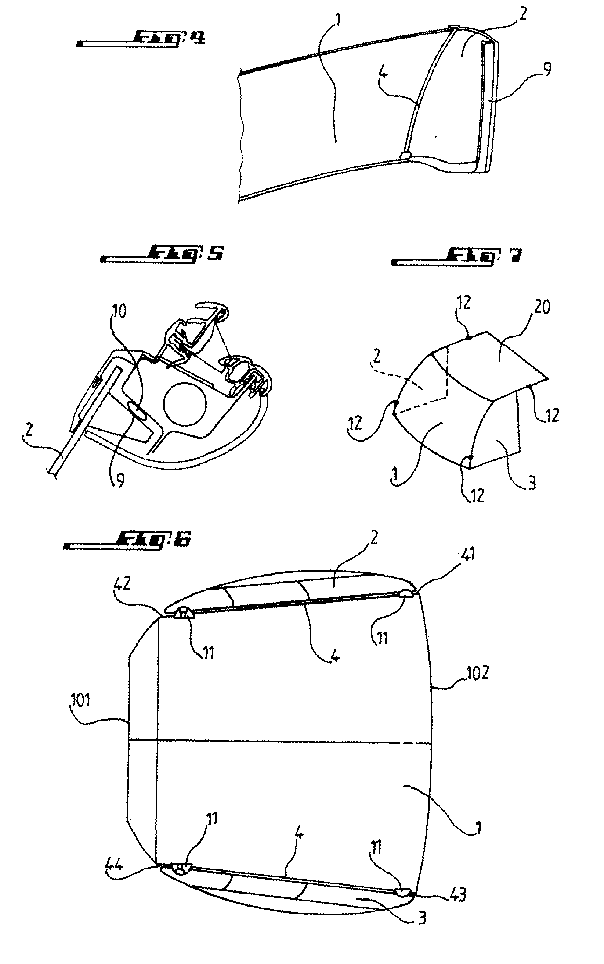

Comme la figure 2 le montre, la jonction 4 peut être pourvue d'un garnissage intérieur 5 fixé par adhésif ou par clipsage sur une pièce d'interface noyée dans le polymère, cette pièce d'interface pouvant elle-même accueillir une agrafe solidaire du garnissage. De plus, la jonction 4 peut être pourvue d'un enjoliveur extérieur 6 fixé par clipsage sur des agrafes chaussées à chaud ou noyées dans le polymère ou encore par adhésif, et vissage en parties supérieure et inférieure.

La jonction 4 peut également intégrer une fonction anti-salissure 7 canalisant l'eau de pluie vers le pavillon d'un véhicule.

Lorsque le galbe d'un vitrage ou les propriétés mécaniques du polymère utilisé le requièrent, il peut être nécessaire de pourvoir la jonction 4 d'un insert métallique 8 dont la forme, et notamment la section, est à définir selon l'application particulière. Selon la partie (a) de la figure 3, l'insert 8 peut avoir une section en T tout comme l'insert 8 peut avoir une section en H, comme cela est représenté sur la partie (b) de la figure 3.

Il est aisément compréhensible que le recours à un insert métallique augmente en général l'occultation visuelle générée par la jonction surmoulée 4.

Pour éviter des problèmes d'étalement du cordon de colle nécessaire pendant la pose d'un ensemble de vitrages selon l'invention, l'ensemble est pourvu d'une piste d'encollage 9, comme cela est montré sur la figure 4.

En effet, la figure 4 représente la partie droite d'un pare-brise triptyque dans une vue de l'intérieur d'un véhicule équipé d'un tel ensemble de vitrages. On voit sur cette figure notamment une partie de la partie frontale 1 et le retour latéral droit 3 du pare-brise triptyque, en une vue de l'intérieur d'un véhicule équipé d'un tel pare-brise.

La figure 5 représente, en une section transversale, la disposition de la piste d'encollage 9 avec un cordon de colle 10 en application contre la structure de la caisse du véhicule.

La figure 6 montre le pare-brise triptyque de la figure 1 en une vue frontale montrant plus particulièrement les jonctions 4 reliant la partie frontale 1 respectivement avec le retour latéral 2 et avec le retour latéral 3. La figure 6 montre plus particulièrement la disposition de quatre plots 11 intégrés dans les jonctions surmoulées. Les quatre plots 11 sont situés respectivement aux extrémités opposées 41, 42 de la jonction reliant la partie frontale 1 au retour latéral 2 et aux extrémités opposées 43, 44 de la jonction 4 reliant la partie frontale 1 au retour 3 du pare-brise triptyque.

Après préparation (si nécessaire), le pare-brise triptyque encapsulé est posé sur une table de recentrage à l'aide d'un manipulateur, de manière approximativement bien orienté et uniquement par appui sur des bords supérieur 101 et inférieur 102 du pare-brise. Le recentreur effectue l'opération de centrage à deux reprises, à l'aide de rouleaux palpeurs d'un robot de pose qui sont guidés par les bords 101, 102 et à l'aide de ses mécanismes (sur les plots de positionnement intégrés à la jonction surmoulée), pour assurer la bonne mise en position de la vitre.

Le robot de pose vient alors saisir la vitre centrale, à l'aide des ventouses centrales de son préhenseur. Le recentreur actionne le système de mise en position théorique des fenestrons du pare-brise pour rattraper une éventuelle souplesse de la jonction surmoulée. Le robot actionne alors les ventouses latérales afin de maintenir les fenestrons. Le robot effectue l'opération d'encollage puis va vers la structure du véhicule destinée à recevoir le pare-brise triptyque et le pose sur le véhicule.

La figure 7 représente enfin une variante d'un ensemble de vitrages selon l'invention. Cette variante consiste en une partie centrale 1 d'un pare-brise triptyque, de deux retours latéraux 2, 3 et d'un toit vitré 20. Ces quatre vitrages sont assemblés moyennant des jonctions en polymère. Avantageusement, l'ensemble de vitrages de la figure 7 est pourvu de quatre repères de positionnement 12 dont deux sont disposés aux extrémités inférieurs des jonctions reliant la partie frontale respectivement avec le retour 2 et avec le retour 3, alors que les deux autres repères sont disposés à l'extrémité des bords latéraux du toit vitré 20, à l'opposé du pare-brise triptyque.

## Revendications

1. Ensemble de vitrages pour un véhicule automobile, les vitrages (1, 2, 3) étant au moins au nombre de deux et étant assemblés par au moins une jonction (4) réalisée sous la forme d'une encapsulation, **caractérisé en ce que** la jonction (4), ou chacune des jonctions, est un surmoulage en polymère obtenu par injection dudit polymère.

2. Ensemble de vitrages selon la revendication 1, **caractérisé en ce qu'**au moins un des vitrages (1) n'est pas un vitrage plan.

3. Ensemble de vitrages selon la revendication 1 ou 2, **caractérisé en ce qu'**au moins un des vitrages (1) est un pare-brise.

4. Ensemble de vitrages selon l'une quelconque des revendications 1 à 3, **caractérisé en ce que** les vitrages forment au moins un pare-brise triptyque comportant une partie frontale (1) et deux retours latéraux (2, 3).

5. Ensemble de vitrages selon l'une quelconque des revendications 1 à 4, **caractérisés en ce qu'**un (1) des vitrages (1, 2, 3, 20) est un pare-brise et un autre (20) est un toit vitré.

6. Ensemble de vitrages selon l'une quelconque des revendications 1 à 5, **caractérisés en ce qu'**au moins une des jonctions (4) est pourvue d'un insert métallique (8).

7. Ensemble de vitrages selon l'une quelconque des revendications 1 à 6, **caractérisés en ce qu'**il est pourvu de repères de position (11).

8. Ensemble de vitrages selon l'une quelconque des revendications 1 à 7, **caractérisés en ce que** les repères (11) sont disposés proches des extrémités opposées (41 - 44) d'au moins deux jonctions (4).

9. Ensemble de vitrages selon l'une quelconque des revendications 7 à 8, **caractérisés en ce que** les repères (11) sont disposés sensiblement aux extrémités opposées (41 - 44) des deux jonctions (4) reliant la partie frontale (1) et les deux retours latéraux (2, 3) du pare-brise triptyque.

10. Pare-brise triptyque comportant une partie frontale (1) et deux retours latéraux (2, 3), **caractérisé en ce que** la partie frontale (1) et les deux retours latéraux (2, 3) sont assemblés par des jonctions (4) réalisées sous la forme de surmoulages en polymère et **en ce que** le pare-brise (1, 2, 3) est pourvu de quatre repères (11) disposés sensiblement aux extrémités opposées (41 - 44) des deux jonctions (4) reliant la partie frontale (1) et les deux retours latéraux (2, 3).

11. Procédé de pose d'un ensemble de vitrages selon l'une quelconque des revendications 1 à 9 ou d'un pare-brise selon la revendication 10 dans un véhicule automobile à l'aide d'un robot de pose,
**caractérisé en ce qu'**il comprend au moins les étapes suivantes :
poser l'ensemble de vitrages sur une table de recentrage, approximativement bien orienté et uniquement par appui sur des bandes supérieure et inférieur de l'ensemble de vitrages ;
mesurer la position de plots intégrés dans des jonctions surmoulées de l'ensemble de vitrages, les plots étant situés aux extrémités opposées de deux jonctions reliant une partie de l'ensemble à deux autres parties de l'ensemble ;
déduire de la position des plots, un décalage par rapport à une position nominale dans l'espace, ce décalage indiquant au robot de pose la position à adopter pour saisir l'ensemble de vitrages ;
encoller une piste d'encollage de l'ensemble de vitrages avec un cordon de colle ;
positionner l'ensemble de vitrages par rapport au véhicule automobile destiné à être équipé avec l'ensemble de vitrages ;
poser l'ensemble de vitrages dans le véhicule automobile.

12. Véhicule automobile, **caractérisé en ce qu'**il comprend un ensemble de vitrages (1, 2, 3) selon l'une quelconque des revendications 1 à 9 ou un pare-brise selon la revendication 10.
